# EUROPEAN PATENT APPLICATION

(11) **EP 4 557 687 A1**
(43) Date of publication of application: **21.05.2025**
(21) Application number: 23851414.5
(22) Date of filing: 28.06.2023
(51) Int. Cl.: H04L 45/00, H04L 45/50

(54) **ROUTING INFORMATION TRANSMISSION METHOD AND APPARATUS**

(30) Priority: 09.08.2022 CN 202210953219
(71) Applicant: Huawei Technologies Co., Ltd., Shenzhen, Guangdong 518129 (CN)
(72) Inventor: ZHAO, Mengkai, Shenzhen, Guangdong 518129 (CN); XU, Guoqi, Shenzhen, Guangdong 518129 (CN); JIANG, Yu, Shenzhen, Guangdong 518129 (CN)
(74) Representative: Maiwald GmbH
(86) International application number: PCT/CN2023/103082
(87) International publication number: WO 2024/032187

(57) **Abstract**

This application discloses a route information transmission method and apparatus. The method includes: After receiving a first packet from a first network domain, a first network device generates a second packet based on the first packet. The first packet includes an SRv6 locator, the second packet includes the SRv6 locator and a route metric identifier, and the route metric identifier indicates a manner of calculating a route cost of a corresponding route to the SRv6 locator. The first network device sends the second packet to a second network device in a second network domain, where the second packet further includes a first route metric value of a corresponding route from the first network device to the SRv6 locator in the first network domain. To be specific, when the first network device introduces the route of the SRv6 locator in the first network domain into the second network domain, the route metric identifier is included in the generated second packet. In this way, when calculating the route cost of the corresponding route to the SRv6 locator, the network device in the second network domain may determine a calculation manner based on the route metric identifier, and then obtain the route cost in the determined calculation manner.

## Description

This application claims priority to Chinese Patent Application No. 202210953219.8, filed on August 9, 2022 and entitled "ROUTE INFORMATION TRANSMISSION METHOD AND APPARATUS", which is incorporated herein by reference in its entirety.

### TECHNICAL FIELD

This application relates to the field of communication technologies, and in particular, to a route information transmission method and apparatus.

### BACKGROUND

Currently, open shortest path first (open shortest path first, OSPF) is a most commonly used interior gateway protocol (interior Gateway Protocol, IGP) protocol on a carrier network. An OSPFv3 protocol is extended to carry information about segment routing over an internet protocol version 6 (internet protocol version 6, IPv6) (segment routing over IPv6, SRv6), to implement functions of an SRv6 control plane.

In an OSPFv3 SRv6 scenario, an outside-domain node may be introduced, so that an intra-domain node can compute a route to the outside-domain node. Specifically, after introducing a locator (locator) of the outside-domain node, an autonomous system boundary router (autonomous system boundary router, ASBR) generates a link-state advertisement (link-state advertisement, LSA) and floods the LSA into the domain, so that the intra-domain node computes, based on the LSA, the route to the outside-domain node. However, due to a limitation of a current inherent structure of the LSA, information related to the locator cannot be carried in the LSA, which affects route computing.

### SUMMARY

This application provides a route information transmission method and apparatus, so that a route metric type is carried in a route packet, and a network device can compute a route to an outside-domain node.

According to a first aspect of this application, a route information transmission method is provided. The method includes: A first network device receives a first packet from a first network domain, where the first packet includes an SRv6 locator, and generates a second packet based on the first packet, where the second packet includes the SRv6 locator and a route metric identifier, and the route metric identifier indicates a manner of calculating a route cost of a corresponding route to the SRv6 locator. The first network device sends the second packet to a second network device in a second network domain, so that when receiving the second packet, the second network device calculates the route cost of the corresponding route to the SRv6 locator. The second packet further includes a first route metric value of a corresponding route from the first network device to the SRv6 locator in the first network domain. To be specific, in this application, when introducing a route of an SRv6 locator in the first network domain into the second network domain, the first network device adds the route metric identifier to the generated second packet, so that when calculating the route cost of the corresponding route to the SRv6 locator, the network device in the second network domain may determine a calculation manner based on the route metric identifier, and then obtain the route cost in the determined calculation manner.

When the first network device advertises a route state of the first network device according to an OSPFv3 protocol, the second packet may be an OSPFv3 LSA packet.

In a possible implementation, after receiving the first packet, the first network device may further obtain a first route metric value through calculation, so that the first route metric value is added to the second packet, and the second network device calculates, by using the first route metric value, the route cost to the SRv6 locator.

The route metric identifier may be carried in the second packet in the following manner: The second packet includes an SRv6 locator type length value (type length value, TLV), and the SRv6 locator TLV includes the route metric identifier. When the route metric identifier is carried by using the SRv6 locator TLV, the route metric identifier may be carried by using a flags field Flags in the SRv6 locator TLV. Further, Flags includes an extension bit, and the route metric identifier is carried by using the extension bit. Alternatively, the SRv6 locator TLV includes a first sub-TLV, and the route metric identifier is carried by using the first sub-TLV, that is, the route metric identifier is carried by extending the sub-TLV of the SRv6 locator TLV.

In a possible implementation, the second packet may further include a route identifier, and the route identifier indicates a source of the SRv6 locator, and is for loop prevention. In other words, the route identifier is for preventing a packet that carries the SRv6 locator from being sent to the first network domain.

The route identifier in the second packet may be determined by the first network device, after the first network device receives the first packet, based on the first network domain and according to a configuration policy, the route identifier corresponding to the first network domain. The configuration policy indicates route identifiers corresponding to different network domains, the first network domain may be an intermediate system to intermediate system (intermediate system to intermediate system, ISIS) domain, and the second network domain is an OSPF domain.

Specifically, the route identifier may be carried by using the SRv6 locator TLV in the second packet. Considering that the route identifier occupies a large quantity of bytes, the route identifier may be carried by extending a sub-TLV. For example, the SRv6 locator TLV includes a second sub-TLV, and the second sub-TLV includes the route identifier.

According to a second aspect of this application, a route information transmission method is provided. The method includes: A second network device receives a packet sent by a first network device, where the packet includes an SRv6 locator, a route metric identifier, and a first route metric value that are from a first network domain. The first route metric value is a route metric value of a corresponding route from the first network device to the SRv6 locator in the first network domain, and the second network device is located in a second network domain. The second network device determines, based on the route metric identifier, a route cost of a corresponding route to the SRv6 locator. The route metric identifier indicates a manner of calculating the route cost of the corresponding route to the SRv6 locator. After receiving a packet including the route metric identifier, the second network device may determine, based on the route metric identifier, the route cost to the SRv6 locator.

To determine the route cost to the SRv6 locator, the second network device may first determine a second route metric value of the corresponding route from the second network device to the SRv6 locator in the second network domain, and then determine, based on the route metric identifier, a final route cost to the SRv6 locator.

Specifically, if the route metric identifier is a first identifier, it indicates that both a route cost of the corresponding route from the first network device to the SRv6 locator in the first network domain and the second route metric value of the corresponding route from the second network device to the SRv6 locator in the second network domain need to be considered when the route cost is calculated. In this case, the second network device uses a sum of the first route metric value and the second route metric value as the route cost of the corresponding route from the second network device to the SRv6 locator.

If the route metric identifier is a second identifier, it indicates that only the route cost of the corresponding route from the first network device to the SRv6 locator in the first network domain needs to be considered when the route cost is calculated, and the second network device uses the first route metric value as the route cost of the corresponding route from the second network device to the SRv6 locator.

If the route metric identifier is a third identifier, it indicates that only the route cost of the corresponding route from the second network device to the SRv6 locator in the second network domain needs to be considered when the route cost is calculated, and the second network device uses the second route metric value as the route cost of the corresponding route from the second network device to the SRv6 locator.

The packet includes an SRv6 locator TLV, and the SRv6 locator TLV includes the route metric identifier. Alternatively, the SRv6 locator TLV includes a flags field Flags, and Flags includes the route metric identifier. Alternatively, Flags includes an extension bit, and the route metric identifier is carried in the extension bit. Alternatively, the SRv6 locator TLV includes a first sub-TLV, and the first sub-TLV includes the route metric identifier.

According to a third aspect of this application, a route information transmission method is provided. The method includes: A network device receives, according to a first routing protocol, a route advertisement packet used to advertise a route of an SRv6 locator, where the route advertisement packet includes an SRv6 locator and a route identifier, and the route identifier indicates a source of the SRv6 locator. When determining that the route identifier is an identifier corresponding to the network device, and does not forward the packet, the network device avoids introducing the SRv6 locator into a second routing protocol.

The route advertisement packet may include an SRv6 locator TLV, and the SRv6 locator TLV includes the route identifier. Further, the SRv6 locator TLV may include a second sub-TLV, and the second sub-TLV includes the route identifier.

According to a fourth aspect of this application, a route information transmission apparatus is provided. The apparatus is used in a first network device and includes: a receiving unit, configured to receive a first packet from a first network domain, where the first packet includes an SRv6 locator; a generation unit, configured to generate a second packet based on the first packet, where the second packet includes the SRv6 locator and a route metric identifier, and the route metric identifier indicates a manner of calculating a route cost of a corresponding route to the SRv6 locator; and a sending unit, configured to send the second packet to a second network device in a second network domain, where the second packet further includes a first route metric value of a corresponding route from the first network device to the SRv6 locator in the first network domain.

In a possible implementation, the second packet is an OSPFv3 LSA packet.

In a possible implementation, the apparatus further includes a calculation unit.

The calculation unit is configured to: after receiving the first packet, obtain the first route metric value through calculation.

In a possible implementation, the second packet includes an SRv6 locator TLV, and the SRv6 locator TLV includes the route metric identifier.

In a possible implementation, the SRv6 locator TLV includes a flags field Flags, and Flags includes the route metric identifier.

In a possible implementation, Flags includes an extension bit, and the extension bit carries the route metric identifier.

In a possible implementation, the SRv6 locator TLV includes a first sub-TLV, and the first sub-TLV includes the route metric identifier.

In a possible implementation, the second packet further includes a route identifier, the route identifier indicates a source of the SRv6 locator, and the route identifier is for loop prevention.

In a possible implementation, the apparatus further includes a determining unit.

The determining unit is configured to: after receiving the first packet, determine, based on the first network domain and according to a configuration policy, the route identifier corresponding to the first network domain.

In a possible implementation, the second packet includes an SRv6 locator TLV, and the SRv6 locator TLV includes the route identifier.

In a possible implementation, the SRv6 locator TLV includes a second sub-TLV, and the second sub-TLV includes the route identifier.

In a possible implementation, the first network domain is an ISIS domain, and the second network domain is an OSPF domain.

According to a fifth aspect of this application, a route information transmission apparatus is provided. The apparatus is used in a second network device and includes: a receiving unit, configured to receive a packet sent by a first network device, where the packet includes an SRv6 locator Locator, a route metric identifier, and a first route metric value that are from a first network domain, the first route metric value is a route metric value of a corresponding route from the first network device to the SRv6 locator in the first network domain, and the second network device is located in a second network domain; and a determining unit, configured to determine, based on the route metric identifier, a route cost of a corresponding route to the SRv6 locator.

In a possible implementation, the determining unit is further configured to determine a second route metric value of the corresponding route from the second network device to the SRv6 locator in the second network domain.

In a possible implementation, the determining unit is specifically configured to: if the route metric identifier is a first identifier, use, by a third network device, a sum of the first route metric value and the second route metric value as a route cost of a corresponding route from the second network device to the SRv6 locator.

In a possible implementation, the determining unit is specifically configured to: if the route metric identifier is a second identifier, use, for the second network device, the first route metric value as the route cost of the corresponding route from the second network device to the SRv6 locator.

In a possible implementation, the packet includes an SRv6 locator TLV, and the SRv6 locator TLV includes the route metric identifier.

In a possible implementation, the SRv6 locator TLV includes a flags field Flags, and Flags includes the route metric identifier.

In a possible implementation, Flags includes an extension bit, and the extension bit carries the route metric identifier.

In a possible implementation, the SRv6 locator TLV includes a first sub-TLV, and the first sub-TLV includes the route metric identifier.

According to a sixth aspect of this application, a route information transmission apparatus is provided. The apparatus includes: a receiving unit, configured to receive, according to a first routing protocol, a route advertisement packet used to advertise a route of an SRv6 locator Locator, where the route advertisement packet includes an SRv6 locator and a route identifier, and the route identifier indicates a source of the SRv6 locator; and a processing unit, configured to: determining that the route identifier is an identifier of a network device, avoid introducing the SRv6 locator into a second routing protocol.

In a possible implementation, the route advertisement packet includes an SRv6 locator TLV, and the SRv6 locator TLV includes the route identifier.

In a possible implementation, the SRv6 locator TLV includes a second sub-TLV, and the second sub-TLV includes the route identifier.

According to a seventh aspect of this application, a communication device is provided. The device includes a processor and a memory.

The memory is configured to store instructions or a computer program.

The processor is configured to execute the instructions or the computer program in the memory, to enable the communication device to perform the method according to any one of the first aspect or the possible implementations of the first aspect, or the method according to any one of the second aspect or the possible implementations of the second aspect, or the method according to the third aspect or the possible implementations of the third aspect.

According to an eighth aspect of this application, a computer-readable storage medium is provided, including instructions. When the instructions are run on a computer, the computer is enabled to perform the method according to any one of the first aspect or the possible implementations of the first aspect, or the method according to the second aspect or the possible implementations of the second aspect, or the method according to the third aspect or the possible implementations of the third aspect.

According to a ninth aspect of this application, a computer program product is provided. The computer program product includes a program. When the program runs on a processor, a computer or a network device is enabled to perform the method according to any one of the first aspect or the possible designs of the first aspect, or the method according to any one of the second aspect or the possible designs of the second aspect, or the method according to any one of the third aspect or the possible designs of the third aspect.

According to a tenth aspect of this application, a chip is provided, including an interface circuit and a processor. The interface circuit is connected to the processor, and the processor is configured to enable the chip to perform the method according to any one of the first aspect or the possible designs of the first aspect, or the method according to any one of the second aspect or the possible designs of the second aspect, or the method according to any one of the third aspect or the possible designs of the third aspect.

According to the technical solution provided in embodiments of this application, after receiving a first packet from a first network domain, a first network device generates a second packet based on the first packet. The first packet includes an SRv6 locator, the second packet includes the SRv6 locator and a route metric identifier, and the route metric identifier indicates a manner of calculating a route cost of a corresponding route to the SRv6 locator. The first network device sends a second packet to a second network device in a second network domain, where the second packet further includes a first route metric value of a corresponding route from the first network device to the SRv6 locator in the first network domain. To be specific, when introducing a route of the SRv6 locator in the first network domain into the second network domain, the first network device adds the route metric identifier to the generated second packet, so that when calculating the route cost of the corresponding route to the SRv6 locator, the network device in the second network domain may determine a calculation manner based on the route metric identifier, and then obtain the route cost in the determined calculation manner.

### BRIEF DESCRIPTION OF DRAWINGS

To describe the technical solutions in embodiments of this application or the conventional technology more clearly, the following briefly describes the accompanying drawings for describing embodiments or the conventional technology. It is clear that, the accompanying drawings in the following descriptions show only some embodiments recorded in this application, and persons of ordinary skill in the art may still derive other drawings from these accompanying drawings without creative efforts.
FIG. 1 is a diagram of a scenario of introducing an SRv6 locator according to an embodiment of this application;
FIG. 2 is a flowchart of a route information transmission method according to an embodiment of this application;
FIG. 3a is a diagram of a structure of an SRv6 locator TLV according to an embodiment of this application;
FIG. 3b is a diagram of a structure of a flags field Flags according to an embodiment of this application;
FIG. 3c is a diagram of a structure of carrying a route metric identifier in Flags according to an embodiment of this application;
FIG. 3d is a diagram of a structure of carrying a route metric identifier in a first sub-TLV according to an embodiment of this application;
FIG. 4a is a diagram of a loop formation scenario according to an embodiment of this application;
FIG. 4b is a diagram of a structure of carrying a route identifier in a second sub-TLV according to an embodiment of this application;
FIG. 5a is a diagram of a scenario in which a route metric identifier is a first identifier according to an embodiment of this application;
FIG. 5b is a diagram of a scenario in which a route metric identifier is a second identifier according to an embodiment of this application;
FIG. 6 is a flowchart of another route information transmission method according to an embodiment of this application;
FIG. 7 is a diagram of preventing loop formation according to an embodiment of this application;
FIG. 8 to FIG. 10 are diagrams of structures of route information transmission apparatuses according to embodiments of this application;
FIG. 11 is a diagram of a structure of a network device according to an embodiment of this application; and
FIG. 12 is a diagram of a structure of another network device according to an embodiment of this application.

### DESCRIPTION OF EMBODIMENTS

To make persons skilled in the art understand the solutions in this application better, the following clearly and completely describes the technical solutions in embodiments of this application with reference to the accompanying drawings in embodiments of this application. It is clear that, the described embodiments are merely a part rather than all of embodiments of this application.

To facilitate understanding of the technical solutions provided in embodiments of this application, the following first describes technologies in this application.

In a scenario in which an OSPFv3 supports an SRv6, an ASBR may introduce a route of an SRv6 locator from an ISIS domain into an OSPF domain. Generally, in the SRv6, each segment (Segment) is identified by a segment identifier (Segment ID, SID). The SID is a special IPv6 address with both a routing capability of a common IPv6 address and a behavior capability unique to the SRv6. Each SRv6 node maintains a SID table (which is actually a part of a routing table), including a plurality of 128-bit SIDs. The SID includes a locator (Locator) and a function (Function). The locator identifies a locator of the SRv6 node. Each node has a globally unique locator value as a shared prefix of a local SID. Another node accesses the node SID through a locator route.

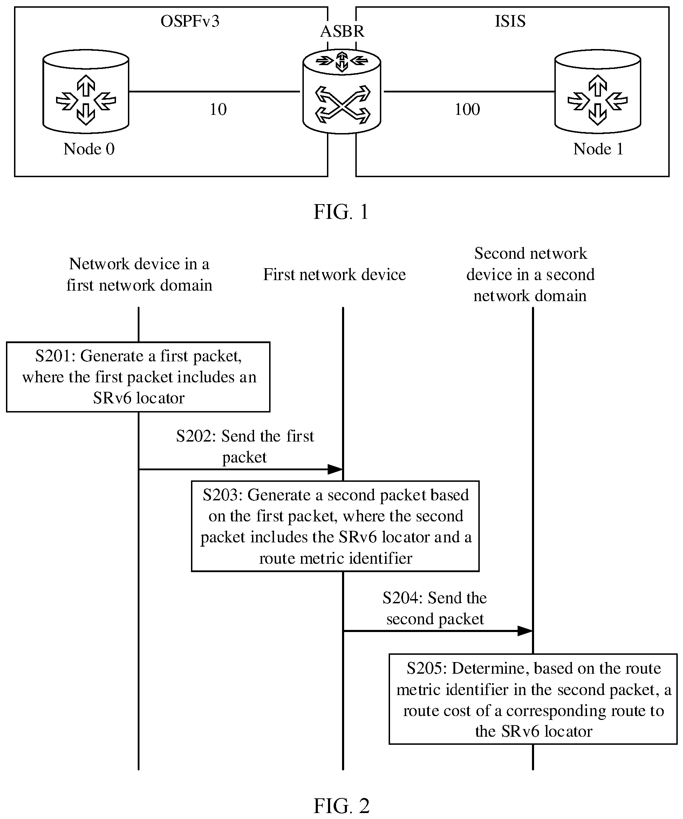

As shown in FIG. 1, a node 1 in an ISIS domain is configured with an SRv6 locator, and an ASBR sends an LSA whose packet type is an external (External) type to a node 0 in an OSPF domain. The LSA includes the SRv6 locator of the node 1 and a route metric value (100) from the ASBR to the node 1. After receiving the LSA, the node 0 determines a route to the SRv6 locator.

OSPF route types advertised by the ASBR are classified into an OE1 outside-domain route and an OE2 outside-domain route. The OE1 outside-domain route indicates an accumulated route metric (Metric) value, to be specific, an OE1 route cost includes an external cost and an internal cost of each link that a packet passes through, for example, a cost from the node 0 to the node 1 is 110 (100+10). The OE2 outside-domain route indicates a route metric (Metric) value that is not accumulated, to be specific, an OE2 route cost includes only an external cost, for example, a cost from the node 0 to the node 1 is 100. However, currently, the LSA sent by the ASBR to the node 0 does not indicate a route type. Consequently, when determining the route to the SRv6 locator, the node 0 cannot determine whether a route metric value (10) from the node 0 to the ASBR needs to be added. Consequently, the node 0 cannot determine a route cost to the locator.

On this basis, an embodiment of this application provides a route information transmission method. Specifically, a first network device receives a first packet from a first network domain, where the first packet includes an SRv6 locator. The first network device generates a second packet based on the first packet, where the second packet includes the SRv6 locator and a route metric identifier, and the route metric identifier indicates a manner of calculating a route cost of a corresponding route to the SRv6 locator. That is, the route metric identifier indicates a route type. The first network device sends the second packet to a second network device from a second network domain, so that the second network device can calculate, based on the route metric identifier in the second packet, the route cost of the corresponding route to the SRv6 locator.

Specifically, the first network device is, for example, the ASBR in FIG. 1, the first network domain is an ISIS domain, the second network domain is an OSPF domain, and the second network device is a node 0 in the OSPF domain. The SRv6 locator included in the first packet indicates a node 1 in the ISIS domain. After receiving the first packet sent by the node 1, the ASBR generates the second packet including the SRv6 locator and the route metric identifier, and sends the second packet to the node 0, so that the node 0 determines, based on the route metric identifier in the second packet, a manner of calculating the route cost of the corresponding route to the SRv6 locator, and further calculates the route cost of the corresponding route to the SRv6 locator.

To facilitate understanding of the technical solutions provided in embodiments of this application, the following describes the technical solutions with reference to the accompanying drawings.

FIG. 2 is a flowchart of a route information transmission method according to an embodiment of this application. As shown in FIG. 2, the method includes the following steps.

S201: A network device in a first network domain generates a first packet, where the first packet includes an SRv6 locator.

In this embodiment, the network device located in the first network domain may actively flood the SRv6 locator of the network device into the domain via the first packet, so that a node in the domain can determine a route to the SRv6 locator. For example, the first network domain may be the ISIS domain in FIG. 1, and the network device in the first network domain is the node 1 in FIG. 1; or the first network domain may be the OSPF domain in FIG. 1, and the network device in the first network domain is the node 0 in FIG. 1.

The first packet may further include a routing algorithm, and the routing algorithm may indicate the network device to calculate a constraint-based network route. Specifically, the routing algorithm may include a flexible algorithm (Flex-Algo) identifier, so that the network device determines a route based on the Flex-Algo. An algorithm range that may be customized is Flex-Algo (128) to Flex-Algo (255), each Flex-Algo algorithm may be represented by Flex-Algo (k), and the Flex-Algo (k) has local significance only in a logical topology participating in the algorithm.

S202: The network device in the first network domain sends the first packet to a first network device.

The first network device is a network device crossing a plurality of network domains, and the plurality of network domains include the first network domain and a second network domain. For example, the first network device is the ASBR in FIG. 1, the first network domain is the ISIS domain, and the second network domain is the OSPF domain.

S203: The first network device generates a second packet based on the first packet, where the second packet includes the SRv6 locator and a route metric identifier, and the route metric identifier indicates a manner of calculating a route cost of a corresponding route to the SRv6 locator.

In this embodiment, after receiving the first packet sent by the network device in the first network domain, the first network device may determine the route metric identifier according to a preconfigured routing policy, to generate the second packet based on the first packet and the route metric identifier. Specifically, the route metric identifier may be a first identifier (OE1) or a second identifier (OE2). The first identifier indicates that a network device needs to accumulate a route metric (Metric) value when calculating the route cost, and the second identifier indicates that the route cost includes only an external route metric (Metric) value when a network device calculates the route cost.

After receiving the first packet, the first network device may determine, based on a network domain in which the network device that sends the first packet is located and a preconfigured correspondence between a network domain and a route metric identifier, the route metric identifier that needs to be added to the second packet. For example, the ASBR crosses an ISIS1 domain, an ISIS2 domain, and the OSPF domain, and the preconfigured correspondence is that the ISIS1 domain corresponds to the OE1, and the ISIS2 domain corresponds to the OE2. After the ASBR receives a first packet sent by a network device in the ISIS1 domain, the determined route metric identifier is the OE1. After the ASBR receives a first packet sent by a network device in the ISIS2 domain, the determined route metric identifier is the OE2.

The second packet may further include a first route metric value, and the first route metric value is a route metric value of a corresponding route from the first network device to the SRv6 locator in the first network domain. For example, the first network device is the ASBR in FIG. 1, the SRv6 locator corresponds to the node 1 in FIG. 1, and the first route metric value is 100. The first route metric value may be pre-calculated by the first network device, or may be a route metric value that is of the route to the SRv6 locator and that is calculated by the first network device after the first network device receives the first packet.

When the second network domain crossed by the first network device is an OSPFv3 domain, the second packet may be an OSPFv3 LSA packet. In addition, because the first network device enters the OSPFv3 domain from another network domain, the second packet is an external type OSPFv3 LSA packet. The external type OSPFv3 LSA packet may include an autonomous system external LSA (Autonomous system external LSA), which is also referred to as a Type 5 LSA, and a not-so-stubby area (Not-So-Stubby Area, NSSA) external LSA, which is also referred to as a Type 7 LSA. The Type 5 LSA describes a network route to the outside of an OSPF autonomous system. The Type 5 LSA is sent by the ASBR and flooded inside the entire autonomous system. The Type 7 LSA is the same as the Type 5 LSA. An only difference lies in that the Type 5 LSA is flooded inside the entire OSPF autonomous system, whereas the Type 7 LSA is flooded only inside the not-so-stubby area from which the NSSA external LSA advertisement is initially sent.

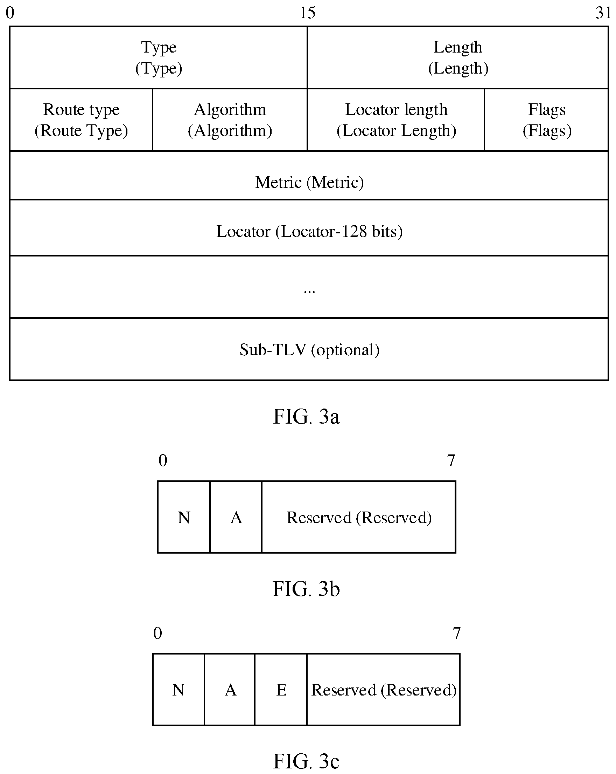

Optionally, the second packet may include a segment routing over an internet protocol version 6 locator type length value (SRv6 locator TLV), and the SRv6 locator TLV includes the route metric identifier. Refer to a diagram of a structure of an SRv6 locator TLV shown in FIG. 3a. The SRv6 locator TLV includes a type (Type) field, a length (Length) field, a route type (Route Type) field, an algorithm (Algorithm) field, a locator length (Locator Length) field, a flags (Flags) field, a metric (Metric) field, a locator (Locator) field, and a sub-TLV.

The route metric identifier may be carried by a reserved bit in an existing field in the SRv6 locator TLV. For example, the route metric identifier is carried in flags (Flags). A format of the flags (Flags) is shown in FIG. 3b, and an N bit (1 bit), an A bit (1 bit), and a reserved (Reserved) bit are included. When the SRv6 locator uniquely identifies a node in a network, the N bit is to be set. When the SRv6 locator does not uniquely identify a node in a network, the N bit is removed. When the SRv6 locator is configured as anycast (anycast), the A bit is to be set. In specific implementation, the route metric identifier may be carried by extending one bit from the reserved bit. For example, as shown in FIG. 3c, the route metric identifier is carried by extending an E bit (1 bit). When the E bit is 0, it indicates that the route cost is calculated based on the OE1. When the E bit is 1, it indicates that the route cost is calculated based on the OE2.

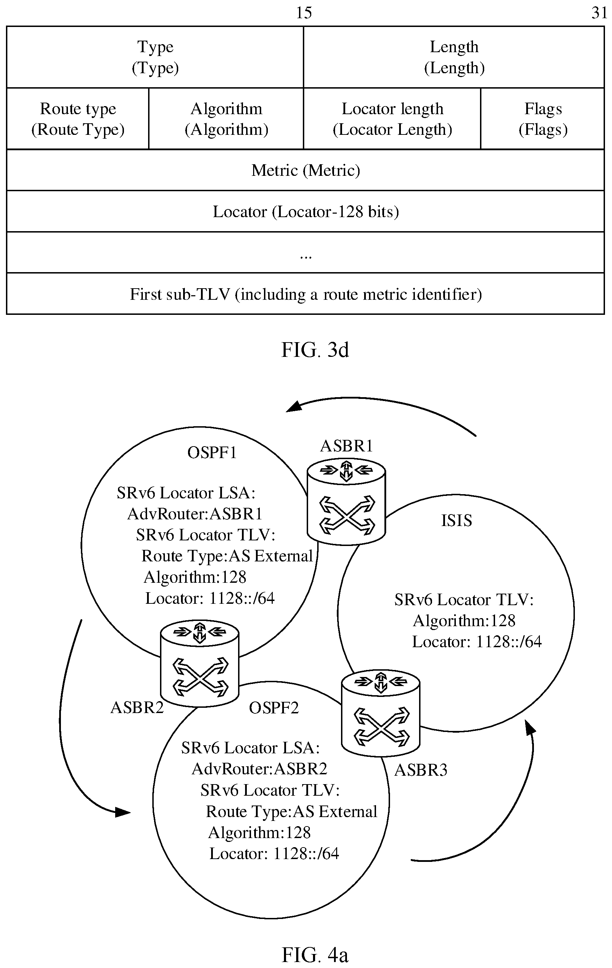

Optionally, the route metric identifier may alternatively be carried by extending a sub-TLV corresponding to the SRv6 locator TLV. For example, the SRv6 locator TLV includes a first sub-TLV, and the first sub-TLV carries the route metric identifier. Refer to a diagram of a structure of an SRv6 locator TLV shown in FIG. 3d. The SRv6 locator TLV includes a first sub-TLV.

In some scenarios, a loop may occur when a route of the SRv6 locator in the ISIS domain is introduced into the OSPF domain via the ASBR. As shown in FIG. 4a, an SRv6 locator of FlexAlgo 128 is configured in the ISIS domain, and is flooded in the domain. An ASBR1 introduces the SRv6 locator to an OSPF1 domain, an ASBR2 introduces the SRv6 locator to an OSPF2 domain, and an ASBR3 introduces the SRv6 locator back to the ISIS domain. Finally, the loop is formed. To avoid the loop, a first network device generates a second packet by including a route identifier in the second packet, where the route identifier indicates a source of the SRv6 locator for loop avoidance. For example, the first network device is the ASBR1 in FIG. 4a, and the SRv6 locator indicates a node in the ISIS domain. In this case, the route identifier indicates that the SRv6 locator is from the ISIS domain.

After receiving the first packet sent by the network device in the first network domain, the first network device may determine, based on the first network domain according to a configuration policy, the route identifier corresponding to the first network domain. The configuration policy indicates route identifiers corresponding to different network domains. For example, the configuration policy is as follows: When the SRv6 locator is from the ISIS1 domain, a corresponding route identifier is equal to 100; or when the SRv6 locator is from the ISIS2 domain, a corresponding route identifier is equal to 200. After receiving the first packet sent by the network device in the ISIS1 domain, the first network device determines that the SRv6 locator in the first packet is from the ISIS1 domain. In this case, the corresponding route identifier is equal to 100, and the second packet includes the route identifier equal to 100.

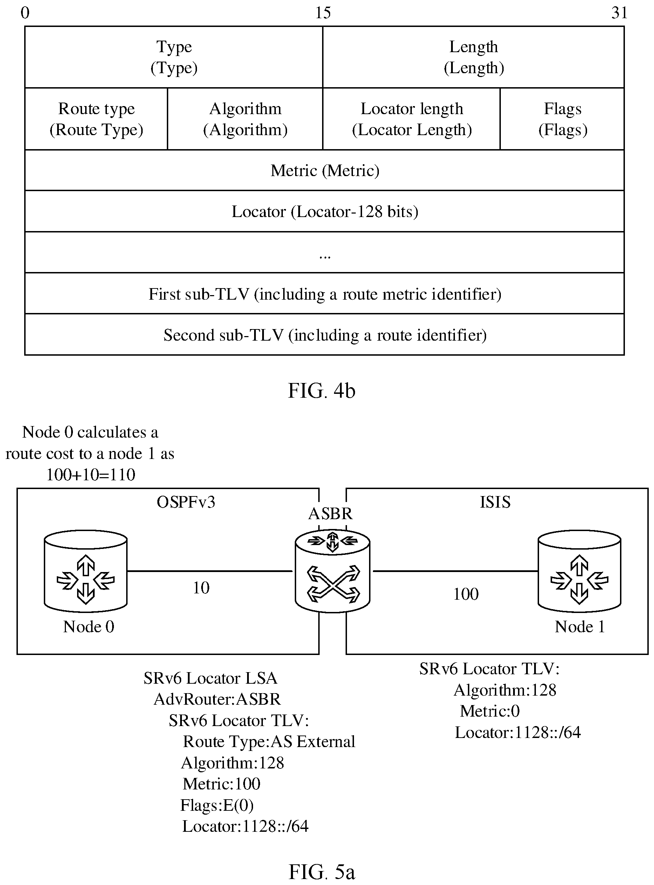

Optionally, when the second packet includes the SRv6 locator TLV, the route identifier is carried by using the SRv6 locator TLV. Considering that the route identifier occupies a large quantity of bytes, the route identifier may be carried by extending a sub-TLV. Specifically, the SRv6 locator TLV includes a second sub-TLV, and the second sub-TLV includes the route identifier. For example, FIG. 4b shows another structure of an SRv6 locator TLV. The SRv6 locator TLV includes a second sub-TLV, and a route identifier is carried in the second sub-TLV.

S204: The first network device sends the second packet to the second network device in the second network domain.

In this embodiment, after generating the second packet, the first network device floods the second packet into the second network domain, so that each network device in the second network domain may determine, based on the second packet, a route to the SRv6 locator. For example, the second network device may be the node 0 in FIG. 1, and a next hop in a route to the SRv6 locator is the ASBR.

S205: The second network device receives the second packet, and determines, based on the route metric identifier in the second packet, a route cost of the corresponding route to the SRv6 locator.

In this embodiment, after receiving the second packet, the second network device may obtain the route metric identifier by parsing the second packet, and then determine, based on the route metric identifier, the route cost to the SRv6 locator.

A second route metric value may be pre-calculated by the second network device, or may be obtained by the second network device through calculation after the second network device receives the second packet sent by the first network device. A calculation timing of the second route metric value is not limited in embodiments.

For ease of understanding, refer to the diagram of the application scenario shown in FIG. 1. When the node 1 in the ISIS domain is configured with the SRv6 locator, the node 1 may advertise, to another node in the domain, a route to the SRv6 locator. After receiving the route advertised by the node 1, the autonomous system boundary router ASBR located in the ISIS domain and the OSPFv3 domain advertises, to the node 0 in the OSPFv3 domain, a route to the SRv6 locator, that is, a next hop node to the SRv6 locator is the ASBR. When advertising the route to the node 0, the ASBR adds a route metric identifier to a packet for advertising the route, where the route metric identifier indicates a manner in which the node 0 calculates a route cost of the corresponding route to the SRv6 locator. After receiving the route advertisement packet sent by the ASBR, the node 0 obtains the route metric identifier by parsing the route advertisement packet, to determine the route cost to the SRv6 locator based on the route metric identifier.

The route metric identifier may indicate different calculation manners, which are separately described below.

If the route metric identifier is the first identifier, the second network device uses a sum of the first route metric value and the second route metric value as the route cost of the route from the second network device to the SRv6 Locator. The first route metric value is a route metric value from the first network device to the SRv6 Locator, and the second route metric value is a route metric value from the second network device to the first network device. For example, as shown in FIG. 5a, a node 1 in an ISIS domain is configured with an SRv6 locator whose routing algorithm is Flex-Algo (128), and a first packet sent by the node 1 to an ASBR includes: the routing algorithm-Flex-Algo (128), a route metric Metric equal to 0, and a locator equal to 1128::/64. After receiving the first packet, the ASBR calculates that a first route metric value to the node 1 is 100, and a generated OSPFv3 locator LSA packet includes metric equal to 100, an added route type Route Type equal to AS external, and a route metric identifier that is a first identifier equal to E(0). After receiving a second packet sent by the ASBR, a node 0 calculates a second route metric value 10 to the ASBR, determines that a next hop to the node 1 is the ASBR, and determines, based on the route metric indicator E(0), that a route cost to the node 1 is 110.

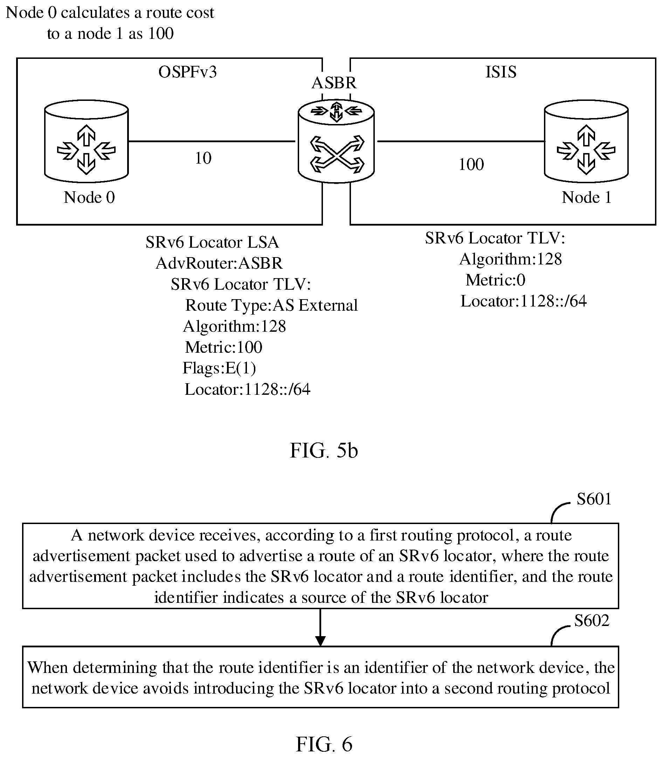

If the route metric identifier is a second identifier, a second network device uses a first route metric value as the route cost of the corresponding route to the SRv6 locator. To be specific, when the route metric identifier is the second identifier, the second network device considers only an outside-domain route metric value, namely, the first route metric value, when determining the route cost of the corresponding route to the SRv6 locator. For example, as shown in FIG. 5b, a node 1 in an ISIS domain is configured with a locator whose routing algorithm is Flex-Algo (128), and is flooded in the domain. When an ASBR is configured with a locator route that is introduced into the ISIS domain, a route metric identifier is a second identifier (E(1)). After receiving information about the SRv6 locator flooded by the node 1, the ASBR generates an OSPFv3 locator LSA packet, and floods the OSPFv3 locator LSA packet into an OSPFv3 domain. After receiving an AS external type LSA packet, a node 0 determines a route to the SRv6 locator, where a next hop is the ASBR and a route cost is 100.

It can be learned that after receiving the first packet from the first network domain, the first network device generates the second packet based on the first packet. The first packet includes the SRv6 locator, the second packet includes the SRv6 locator and the route metric identifier, and the route metric identifier indicates the manner of calculating the route cost of the corresponding route to the SRv6 locator. The first network device sends the second packet to the second network device in the second network domain, where the second packet further includes a first route metric value of a corresponding route from the first network device to the SRv6 locator in the first network domain. To be specific, when introducing the route of the SRv6 locator in the first network domain into the second network domain, the first network device adds the route metric identifier to the generated second packet, so that when calculating the route cost of the corresponding route to the SRv6 locator, the network device in the second network domain may determine a calculation manner based on the route metric identifier, and then obtain the route cost in the determined calculation manner.

For the purpose of loop prevention, the second packet includes the route identifier. For a network device having an introduction function, when introducing a locator of a network domain into another network domain, the network device further needs to perform verification based on the route identifier, to determine, based on a verification result, whether to introduce the locator into the another network domain.

FIG. 6 is another route information transmission method according to an embodiment of this application. As shown in FIG. 6, the method includes the following steps.

S601: A network device receives, according to a first routing protocol, a route advertisement packet used to advertise a route of an SRv6 locator.

In this embodiment, for a network device crossing a plurality of network domains, the network device may run a plurality of routing protocols, to perform route advertisement according to different routing protocols. For example, the network device is the ASBR2 or the ASBR3 in FIG. 4a. When the network device is the ASBR2, both the first routing protocol and a second routing protocol are OSPF. When the network device is the ASBR3, the network device may run a first routing protocol OSPF and a second routing protocol ISIS. The route advertisement packet received by the network device according to the first routing protocol includes the SRv6 locator and a route identifier, and the route identifier indicates a source of the SRv6 locator. After receiving a route advertisement packet sent by a target node, a border routing device in a network domain in which the target node configured with the SRv6 locator is located determines, according to a configuration policy, a route identifier corresponding to the network domain in which the target node is located, and then sends, to a node in another network domain in which the border routing device is located, the route advertisement packet by including the route identifier to the route advertisement packet. For example, the target node is located in the ISIS domain in FIG. 4a, the border routing device is an ASBR1, and the another network domain is an OSPF1.

S602: When determining that the route identifier is an identifier of the network device, the network device avoids introducing the SRv6 locator into the second routing protocol.

After receiving the route advertisement packet according to the first network protocol, and before forwarding the route advertisement packet to the network domain running the second network protocol, the network device first determines whether the route identifier in the route advertisement packet is the identifier of the network device. If the route identifier in the route advertisement packet is the identifier of the network device, it indicates that the SRv6 locator in the route advertisement packet is from the second routing protocol. For the purpose of loop prevention, the SRv6 locator in the route advertisement packet is no longer introduced into the second routing protocol. If the route identifier in the route advertisement packet is not the identifier of the network device, it indicates that the SRv6 locator in the route advertisement packet is not from the second routing protocol, and the SRv6 locator may continue to be introduced into the second routing protocol.

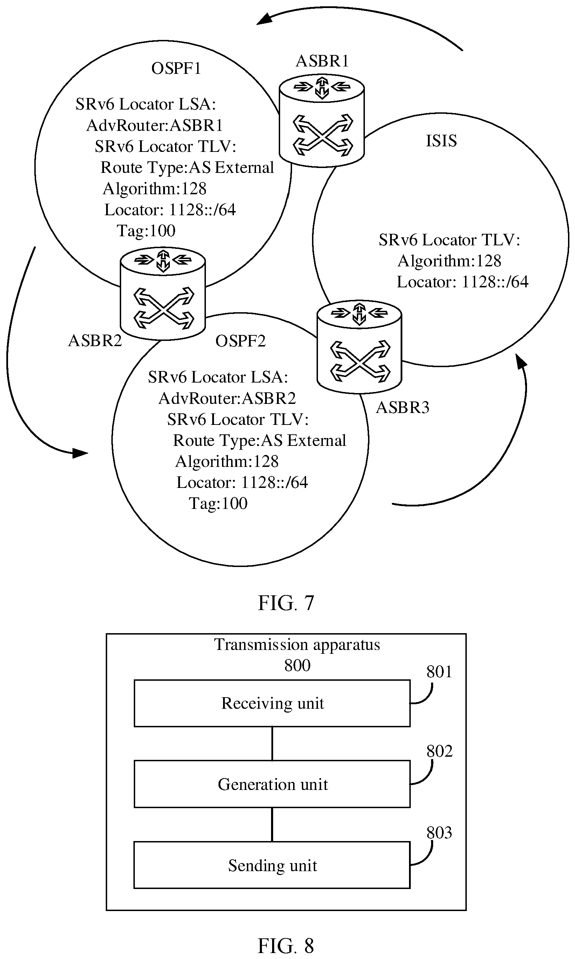

For example, as shown in FIG. 7, an SRv6 locator configured with Flex Algo 128 in an ISIS domain, and a node configured with the SRv6 locator flood, in the domain, into a route advertisement packet of the SRv6 locator. When receiving the route advertisement packet, an ASBR1 determines, according to a configuration policy, that a route identifier Tag that corresponds to the ISIS domain is equal to 100, and when the SRv6 locator is introduced into an OSPF 1 domain, a route identifier Admin Tag equal to 100 is carried. When an ASBR2 receives a route advertisement packet forwarded by a node in the OSPF1 domain and introduces the SRv6 locator into an OSPF2 domain, the route advertisement packet carries the Admin Tag equal to 100. After detecting that the route identifier is not a route identifier corresponding to an OSPF2 in which the ASBR2 is located, the ASBR2 introduces the SRv6 locator into the OSPF2. When receiving the route advertisement packet forwarded by the node in the OSPF2 domain and introducing the SRv6 locator into the ISIS domain, an ASBR3 verifies, according to a configured introduction routing policy, that the Admin Tag equal to 100 is a route identifier corresponding to the ISIS domain, and does not introduce the SRv6 locator into the ISIS domain, to prevent a loop.

That is, the network device may determine, based on the route identifier in the route advertisement packet, whether to forward or discard the received route advertisement packet, to avoid forming the loop.

Based on the foregoing method embodiments, an embodiment of this application provides a route information transmission apparatus. The following provides descriptions with reference to the accompanying drawings.

FIG. 8 is a diagram of a structure of a route information transmission apparatus according to an embodiment of this application. As shown in FIG. 8, the apparatus 800 can implement functions of the first network device in FIG. 2, or the apparatus 800 can implement functions of the ASBR in FIG. 1, FIG. 5a, and FIG. 5b, and functions of the ASBR1 in FIG. 4a or FIG. 7. Refer to FIG. 8. The apparatus 800 may include a receiving unit 801, a generation unit 802, and a sending unit 803. These units may perform corresponding functions of the first network device in the foregoing method examples.

The receiving unit 801 is configured to support the apparatus 800 in performing S203 of receiving the first packet in FIG. 2. The generation unit 802 is configured to support the apparatus 800 in performing S203 of generating the second packet in FIG. 2. The sending unit 803 is configured to support the apparatus 800 in performing S204 in FIG. 2; and/or another process performed by the first network device in the technology described in this specification. For a specific execution process, refer to detailed descriptions of corresponding steps in the embodiment shown in FIG. 2. Details are not described herein again.

Optionally, the apparatus 800 may further include a calculation unit.

The calculation unit is configured to: after receiving a first packet, obtain a first route metric value through calculation.

Optionally, the apparatus 800 may further include a determining unit.

The determining unit is configured to: after receiving the first packet, determine, based on a first network domain and according to a configuration policy, a route identifier corresponding to the first network domain.

It should be noted that unit division in embodiments of this application is an example, and is merely logical function division. In actual implementation, there may be another division manner. Functional units in embodiments of this application may be integrated into one processing unit, or each of the units may exist alone physically, or two or more units are integrated into one unit. For example, in the foregoing embodiment, the processing unit and the sending unit may be a same unit, or may be different units. The integrated unit may be implemented in a form of hardware, or may be implemented in a form of a software functional unit.

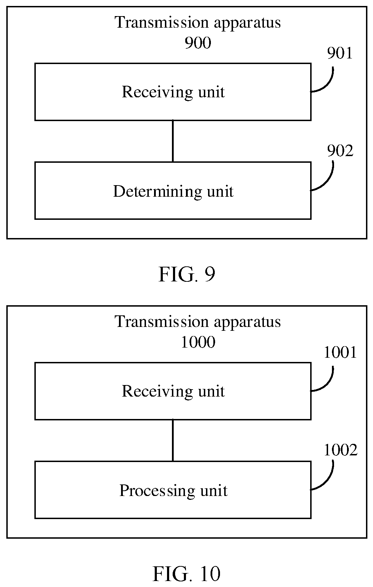

FIG. 9 is a diagram of a structure of another route information transmission apparatus according to an embodiment of this application. As shown in FIG. 9, the apparatus 900 may implement functions of the second network device in FIG. 2, or the apparatus 900 may implement functions of the node 0 in FIG. 1, FIG. 5a, and FIG. 5b, and functions of the ASBR2 in FIG. 4a or FIG. 7. Refer to FIG. 9. The apparatus 900 may include a receiving unit 901 and a determining unit 902. These units may perform corresponding functions of the second network device in the foregoing method examples.

The receiving unit 901 is configured to support the apparatus 900 in performing S205 of receiving the second packet in FIG. 2. The determining unit 902 is configured to support the apparatus 900 in performing S205 of determining the route cost based on the route metric identifier in the second packet in FIG. 2; and/or another process performed by the second network device in the technology described in this specification. For a specific execution process, refer to detailed descriptions of corresponding steps in the embodiment shown in FIG. 2. Details are not described herein again.

Optionally, the determining unit 902 is further configured to determine a second route metric value of a corresponding route from the second network device to an SRv6 locator in a second network domain.

Optionally, the determining unit 902 is specifically configured to: if the route metric identifier is a first identifier, use, by a second network device, a sum of a first route metric value and the second route metric value as a route cost of a corresponding route from the second network device to the SRv6 locator.

Optionally, the determining unit 902 is specifically configured to: if the route metric identifier is a second identifier, use, for the second network device, the first route metric value as the route cost of the corresponding route from the second network device to the SRv6 locator.

It should be noted that unit division in embodiments of this application is an example, and is merely logical function division. In actual implementation, there may be another division manner. Functional units in embodiments of this application may be integrated into one processing unit, or each of the units may exist alone physically, or two or more units are integrated into one unit. For example, in the foregoing embodiment, the processing unit and the sending unit may be a same unit, or may be different units. The integrated unit may be implemented in a form of hardware, or may be implemented in a form of a software functional unit.

FIG. 10 is a diagram of a structure of still another route information transmission apparatus according to an embodiment of this application. As shown in FIG. 10, the apparatus 1000 can implement functions of the network device in FIG. 6, or the apparatus 1000 can implement functions of the ASBR2 and the ASBR3 in FIG. 4a or FIG. 7. Refer to FIG. 10. The apparatus 1000 may include a receiving unit 1001 and a processing unit 1002. These units may perform corresponding functions of the network device in the method example in FIG. 6.

The receiving unit 1001 is configured to support the apparatus 1000 in performing S601 in FIG. 6. The processing unit 1002 is configured to support the apparatus 1000 in performing S602 in FIG. 6; and/or another process performed by the network device in the technology described in this specification. For example, the receiving unit 1001 is configured to receive, by the network device according to a first routing protocol, a route advertisement packet used to advertise a route of an SRv6 locator in the foregoing method embodiment; and the processing unit 1002 is configured to perform various processing operations performed by the network device in the foregoing method embodiment. For example, when the processing unit 1002 is configured to: when determining that the route identifier is an identifier of the network device, avoid introducing the SRv6 locator into a second routing protocol. For a specific execution process, refer to detailed descriptions of corresponding steps in the embodiment shown in FIG. 6. Details are not described herein again.

It should be noted that unit division in embodiments of this application is an example, and is merely logical function division. In actual implementation, there may be another division manner. Functional units in embodiments of this application may be integrated into one processing unit, or each of the units may exist alone physically, or two or more units are integrated into one unit. For example, in the foregoing embodiment, the processing unit and the sending unit may be a same unit, or may be different units. The integrated unit may be implemented in a form of hardware, or may be implemented in a form of a software functional unit.

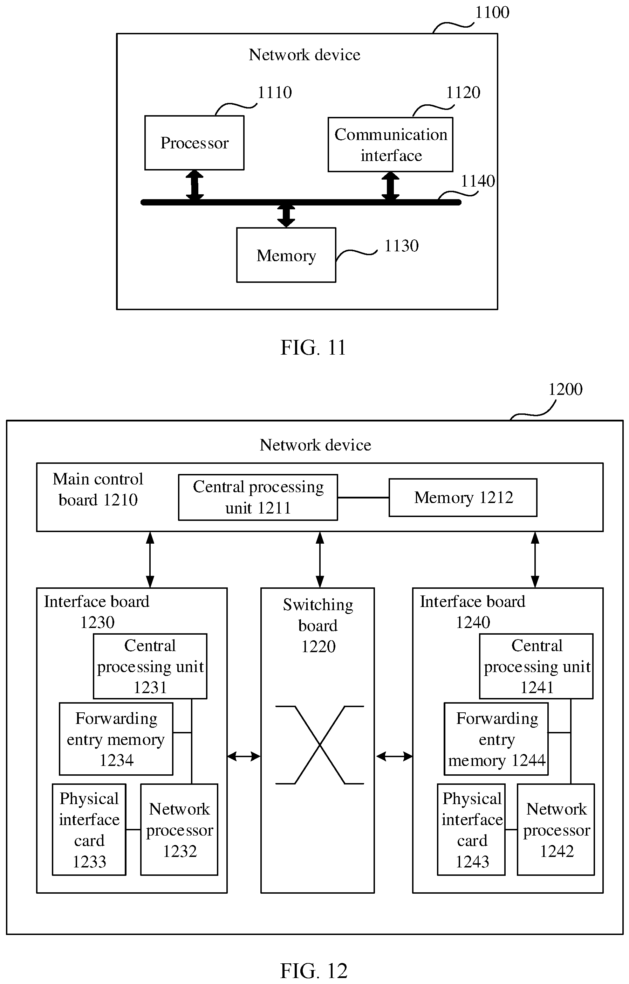

FIG. 11 is a diagram of a structure of a network device according to an embodiment of this application. The network device may be, for example, the first network device or the second network device in the foregoing method embodiments, or may be implemented by a device of the apparatus 800 in the embodiment shown in FIG. 8, the apparatus 900 in the embodiment shown in FIG. 9, or the apparatus 1000 in the embodiment shown in FIG. 10.

The network device 1100 includes a processor 1110, a communication interface 1120, and a memory 1130. There may be one or more processors 1110 in the communication device 1100. In FIG. 11, one processor is used as an example. In this embodiment of this application, the processor 1110, the communication interface 1120, and the memory 1130 may be connected through a bus system or in another manner. In FIG. 11, for example, a bus system 1140 is used for connection.

The processor 1110 may be a CPU, an NP, or a combination of a CPU and an NP. The processor 1110 may further include a hardware chip. The hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable logic gate array (field-programmable gate array, FPGA), a generic array logic (generic array logic, GAL), or any combination thereof.

The memory 1130 may include a volatile memory (volatile memory), for example, a random-access memory (random-access memory, RAM). The memory 1130 may also include a non-volatile memory (non-volatile memory), for example, a flash memory (flash memory), a hard disk drive (hard disk drive, HDD), or a solid-state drive (solid-state drive, SSD). The memory 1130 may also include a combination of memories of the foregoing types. The memory 1130 may store, for example, the segment routing SR policy mentioned above.

Optionally, the memory 1130 stores an operating system and a program, an executable module or a data structure, or a subset thereof, or an extended set thereof, where the program may include various operation instructions, to implement various operations. The operating system may include various system programs, to implement various basic services and process hardware-based tasks. The processor 1110 may read a program in the memory 1130, to implement the segment routing policy processing method provided in this embodiment of this application.

The memory 1130 may be a storage device in the communication device 1100, or may be a storage apparatus independent of the communication device 1100.

The bus system 1140 may be a peripheral component interconnect (peripheral component interconnect, PCI) bus, or an extended industry standard architecture (extended industry standard architecture, EISA) bus. The bus system 1140 may be classified into an address bus, a data bus, a control bus, and the like. For ease of representation, only one thick line is used to represent the bus in FIG. 11, but this does not mean that there is only one bus or only one type of bus.

FIG. 12 is a diagram of a structure of a network device 1200 according to an embodiment of this application. The network device may be, for example, the first network device or the second network device in the foregoing method embodiments, or may be implemented by a device of the apparatus 800 in the embodiment shown in FIG. 8, the apparatus 900 in the embodiment shown in FIG. 9, or the apparatus 1000 in the embodiment shown in FIG. 10.

The network device 1200 includes a main control board 1210 and an interface board 1230.

The main control board 1210 is also referred to as a main processing unit (main processing unit, MPU) or a route processor card (route processor card). The main control board 1210 controls and manages components in the network device 1200, including route computation, device management, device maintenance, and protocol processing functions. The main control board 1210 includes a central processing unit 1211 and a memory 1212.

The interface board 1230 is also referred to as a line processing unit (line processing unit, LPU), a line card (line card), or a service board. The interface board 1230 is configured to: provide various service interfaces, and forward a data packet. The service interface includes but is not limited to an ethernet interface, a POS (Packet over SONET/SDH) interface, and the like. The ethernet interface is, for example, a flexible ethernet service interface (Flexible Ethernet Clients, FlexE Clients). The interface board 1230 includes a central processing unit 1231, a network processor 1232, a forwarding entry memory 1234, and a physical interface card (physical interface card, PIC) 1233.

The central processing unit 1231 on the interface board 1230 is configured to: control and manage the interface board 1230, and communicate with the central processing unit 1211 on the main control board 1210.

The network processor 1232 is configured to implement packet forwarding processing. A form of the network processor 1232 may be a forwarding chip. Specifically, processing on an uplink packet includes: processing an inbound interface of the packet, and searching the forwarding table. Processing of a downlink packet includes: searching the forwarding table, and the like.

The physical interface card 1233 is configured to implement an interconnection function at a physical layer. Original traffic enters the interface board 1230 from the physical interface card and a processed packet is sent from the physical interface card 1233. The physical interface card 1233 includes at least one physical interface, and the physical interface is also referred to as a physical port. The physical interface card 1233, also referred to as a subcard, may be installed on the interface board 1230, and is responsible for converting an optical/electrical signal into a packet, performing validity check on the packet, and forwarding the packet to the network processor 1232 for processing. In some embodiments, the central processing unit 1231 on the interface board 1203 may also perform a function of the network processor 1232, for example, implement software forwarding based on a general-purpose CPU. In this case, the network processor 1232 is not required in the physical interface card 1233.

Optionally, the network device 1200 includes a plurality of interface boards. For example, the network device 1200 further includes an interface board 1240. The interface board 1240 includes a central processing unit 1241, a network processor 1242, a forwarding entry memory 1244, and a physical interface card 1243.

Optionally, the network device 1200 further includes a switching board 1220. The switching board 1220 may also be referred to as a switch fabric unit (switch fabric unit, SFU). When the network device has the plurality of interface boards 1230, the switching board 1220 is configured to complete data exchange between the interface boards. For example, the interface board 1230 and the interface board 1240 may communicate with each other by using the switching board 1220.

The main control board 1210 and the interface board 1230 are coupled. For example, the main control board 1210, the interface board 1230 and the interface board 1240, and the switching board 1220 are connected to a system backboard through a system bus for interworking. In a possible implementation, an inter-process communication (inter-process communication, IPC) channel is established between the main control board 1210 and the interface board 1230, and the main control board 1210 and the interface board 1230 communicate with each other through the IPC channel.

Logically, the network device 1200 includes a control plane and a forwarding plane. The control plane includes the main control board 1210 and the central processing unit 1231. The forwarding plane includes components used for forwarding, for example, the forwarding entry memory 1234, the physical interface card 1233, and the network processor 1232. The control plane performs functions such as a function of a router, generating a forwarding table, processing signaling and protocol packets, and configuring and maintaining a status of a device. The control plane delivers the generated forwarding table to the forwarding plane. On the forwarding plane, the network processor 1232 searches the forwarding table delivered by the control plane to forward a packet received by the physical interface card 1233. The forwarding table delivered by the control plane may be stored in the forwarding entry memory 1234. In some embodiments, the control plane and the forwarding plane may be completely separated, and are not on a same device.

It should be understood that an operation on the interface board 1240 is consistent with an operation on the interface board 1230 in this embodiment of this application. For brevity, details are not described again. It should be understood that the network device 1200 in this embodiment may correspond to the first network device in the foregoing method embodiments. The main control board 1210, the interface board 1230, and/or the interface board 1240 in the network device 1200 may implement various steps in the foregoing method embodiments. For brevity, details are not described herein again.

It may be understood that, there may be one or more main control boards. When there are a plurality of main control boards, the main control boards may include an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may not need a switching board, and an interface board performs a function of processing service data of an entire system. In a distributed forwarding architecture, a network device may have at least one switching board, and implements data exchange between a plurality of interface boards by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained by combining the two central processing units. This form of device (for example, a network device such as a low-end switch or a router) has a weak data exchange and processing capability. A specific architecture to be used depends on a specific networking deployment scenario.

In some possible embodiments, the network device may be implemented as a virtualized device. For example, the virtualized device may be a virtual machine (virtual machine, VM) on which a program having a packet sending function is run, and the virtual machine is deployed on a hardware device (for example, a physical server). The virtual machine refers to a complete software-simulated computer system that has complete hardware system functions and that runs in an entirely isolated environment. The virtual machine may be configured as the network device. For example, the virtual machine may implement a network device based on a general-purpose physical server in combination with a network functions virtualization (network functions virtualization, NFV) technology. The network device is a virtual host, a virtual router, or a virtual switch. By reading this application, persons skilled in the art may obtain, on the general-purpose physical server through virtualization with reference to the NFV technology, the network device having the foregoing functions. Details are not described herein again.

It should be understood that the network devices in the foregoing various product forms have any function of the first network device in the foregoing method embodiments, and details are not described herein.

An embodiment of this application further provides a chip, including a processor and an interface circuit. The interface circuit is configured to: receive instructions, and transmit the instructions to the processor. The processor may be, for example, a specific implementation form of the apparatus 800 shown in FIG. 8, and may be configured to perform the foregoing method. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable controller (programmable logic device, PLD) or another integrated chip.

An embodiment of this application further provides a computer-readable storage medium, including instructions or a computer program. When the instructions or the computer program is run on a computer, the computer is enabled to perform the route information transmission method provided in the foregoing embodiment.

An embodiment of this application further provides a computer program product including instructions or a computer program. When the computer program product runs on a computer, the computer is enabled to perform the route information transmission method provided in the foregoing embodiment.

In the specification, claims, and accompanying drawings of this application, the terms "first", "second", "third", "fourth", and the like (if used) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, terms "include", "have" and any other variants thereof mean to cover non-exclusive inclusion. For example, a process, a method, a system, a product, or a device that includes a list of steps or units is not necessarily limited to those steps or units that are expressly listed, but may include other steps or units that are not expressly listed or inherent to the process, the method, the product, or the device.

Persons skilled in the art may clearly understand that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical, a mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each of the units may exist alone physically, or two or more units are integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, the services described in this application may be implemented by hardware, software, firmware, or any combination thereof. When the services are implemented by using the software, the services may be stored in a computer-readable medium or transmitted as one or more instructions or code in the computer-readable medium. The computer-readable medium includes a computer storage medium and a communication medium. The communication medium includes any medium that enables a computer program to be transmitted from one place to another. The storage medium may be any available medium accessible by a general-purpose or private computer.

In the foregoing specific implementations, the objectives, technical solutions, and the benefits of this application are further described in detail. It should be understood that the foregoing descriptions are merely specific implementations of this application.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A route information transmission method, wherein the method comprises:
receiving, by a first network device, a first packet from a first network domain, wherein the first packet comprises a segment routing over an internet protocol version 6 SRv6 locator Locator;
generating, by the first network device, a second packet based on the first packet, wherein the second packet comprises the SRv6 locator and a route metric identifier, and the route metric identifier indicates a manner of calculating a route cost of a corresponding route to the SRv6 locator; and
sending, by the first network device, the second packet to a second network device in a second network domain, wherein the second packet further comprises a first route metric value of a corresponding route from the first network device to the SRv6 locator in the first network domain.

2. The method according to claim 1, wherein the second packet is an open shortest path first version 3 link-state advertisement OSPFv3 LSA packet.

3. The method according to claim 1 or 2, wherein after the receiving, by a first network device, a first packet, the method further comprises:
obtaining, by the first network device, the first route metric value through calculation.

4. The method according to any one of claims 1 to 3, wherein the second packet comprises a segment routing over an internet protocol version 6 locator type length value SRv6 locator TLV, and the SRv6 locator TLV comprises the route metric identifier.

5. The method according to claim 4, wherein the SRv6 locator TLV comprises a flags field Flags, and Flags comprises the route metric identifier.

6. The method according to claim 5, wherein Flags comprises an extension bit, and the extension bit carries the route metric identifier.

7. The method according to claim 4, wherein the SRv6 locator TLV comprises a first sub-type length value TLV, and the first sub-TLV comprises the route metric identifier.

8. The method according to any one of claims 1 to 7, wherein the second packet further comprises a route identifier, the route identifier indicates a source of the SRv6 locator, and the route identifier is for loop prevention.

9. The method according to claim 8, wherein after the receiving, by a first network device, a first packet, the method further comprises:
determining, by the first network device based on the first network domain according to a configuration policy, the route identifier corresponding to the first network domain.

10. The method according to claim 8 or 9, wherein the second packet comprises the SRv6 locator TLV, and the SRv6 locator TLV comprises the route identifier.

11. The method according to claim 10, wherein the SRv6 locator TLV comprises a second sub-TLV, and the second sub-TLV comprises the route identifier.

12. The method according to any one of claims 1 to 11, wherein the first network domain is an intermediate system to intermediate system ISIS, and the second network domain is an open shortest path first OSPF.

13. A route information transmission method, wherein the method comprises:
receiving, by a second network device, a packet sent by a first network device, wherein the packet comprises an SRv6 locator Locator, a route metric identifier, and a first route metric value that are from a first network domain, the first route metric value is a route metric value of a corresponding route from the first network device to the SRv6 locator in the first network domain, and the second network device is located in a second network domain; and
determining, by the second network device based on the route metric identifier, a route cost of a corresponding route to the SRv6 locator.

14. The method according to claim 13, wherein the method further comprises:
determining, by the second network device, a second route metric value of the corresponding route from the second network device to the SRv6 locator in the second network domain.

15. The method according to claim 14, wherein the determining, by the second network device based on the route metric identifier, a route cost of a corresponding route to the SRv6 locator comprises:
if the route metric identifier is a first identifier, using, by the second network device, a sum of the first route metric value and the second route metric value as the route cost of the corresponding route from the second network device to the SRv6 locator.

16. The method according to any one of claims 13 to 15, wherein the determining, by the second network device based on the route metric identifier, a route cost of a corresponding route to the SRv6 locator comprises:
if the route metric identifier is a second identifier, using, by the second network device, the first route metric value as the route cost of the corresponding route from the second network device to the SRv6 locator.

17. The method according to any one of claims 13 to 16, wherein the packet comprises an SRv6 locator TLV, and the SRv6 locator TLV comprises the route metric identifier.

18. The method according to claim 17, wherein the SRv6 locator TLV comprises a flags field Flags, and Flags comprises the route metric identifier.

19. The method according to claim 18, wherein Flags comprises an extension bit, and the extension bit carries the route metric identifier.

20. The method according to claim 17, wherein the SRv6 locator TLV comprises a first sub-type length value TLV, and the first sub-TLV comprises the route metric identifier.

21. A route information transmission method, wherein the method comprises:
receiving, by a network device according to a first routing protocol, a route advertisement packet used to advertise a route of an SRv6 locator Locator, wherein the route advertisement packet comprises the SRv6 locator and a route identifier, and the route identifier indicates a source of the SRv6 locator; and
when determining that the route identifier is an identifier of the network device, avoiding introducing, by the network device, the SRv6 locator into a second routing protocol.

22. The method according to claim 21, wherein the route advertisement packet comprises an SRv6 locator TLV, and the SRv6 locator TLV comprises the route identifier.

23. The method according to claim 22, wherein the SRv6 locator TLV comprises a second sub-TLV, and the second sub-TLV comprises the route identifier.

24. A route information transmission apparatus, wherein the apparatus is used in a first network device and comprises:
a receiving unit, configured to receive a first packet from a first network domain, wherein the first packet comprises a segment routing over an internet protocol version 6 SRv6 locator Locator;
a generation unit, configured to generate a second packet based on the first packet, wherein the second packet comprises the SRv6 locator and a route metric identifier, and the route metric identifier indicates a manner of calculating a route cost of a corresponding route to the SRv6 locator; and
a sending unit, configured to send the second packet to a second network device in a second network domain, wherein the second packet further comprises a first route metric value of a corresponding route from the first network device to the SRv6 locator in the first network domain.

25. The apparatus according to claim 24, wherein the second packet is an open shortest path first version 3 link-state advertisement OSPFv3 LSA packet.

26. The apparatus according to claim 24 or 25, wherein the apparatus further comprises a calculation unit, wherein
the calculation unit is configured to: after receiving the first packet, obtain the first route metric value through calculation.

27. The apparatus according to any one of claims 24 to 26, wherein the second packet comprises a segment routing over an internet protocol version 6 locator type length value SRv6 locator TLV, and the SRv6 locator TLV comprises the route metric identifier.

28. The apparatus according to claim 27, wherein the SRv6 locator TLV comprises a flags field Flags, and Flags comprises the route metric identifier.

29. The apparatus according to claim 28, wherein Flags comprises an extension bit, and the extension bit carries the route metric identifier.

30. The apparatus according to claim 27, wherein the SRv6 locator TLV comprises a first sub-type length value TLV, and the first sub-TLV comprises the route metric identifier.

31. The apparatus according to any one of claims 24 to 30, wherein the second packet further comprises a route identifier, the route identifier indicates a source of the SRv6 locator, and the route identifier is for loop prevention.

32. The apparatus according to claim 31, wherein the apparatus further comprises a determining unit, wherein
the determining unit is configured to: after receiving the first packet, determine, based on the first network domain according to a configuration policy, the route identifier corresponding to the first network domain.

33. The apparatus according to claim 31 or 32, wherein the second packet comprises the SRv6 locator TLV, and the SRv6 locator TLV comprises the route identifier.

34. The apparatus according to claim 33, wherein the SRv6 locator TLV comprises a second sub-TLV, and the second sub-TLV comprises the route identifier.

35. The apparatus according to any one of claims 24 to 34, wherein the first network domain is an intermediate system to intermediate system ISIS, and the second network domain is an open shortest path first OSPF.

36. A route information transmission apparatus, wherein the apparatus is used in a second network device and comprises:
a receiving unit, configured to receive a packet sent by a first network device, wherein the packet comprises an SRv6 locator Locator, a route metric identifier, and a first route metric value that are from a first network domain, the first route metric value is a route metric value of a corresponding route from the first network device to the SRv6 locator in the first network domain, and the second network device is located in a second network domain; and
a determining unit, configured to determine, based on the route metric identifier, a route cost of a corresponding route to the SRv6 locator.

37. The apparatus according to claim 36, wherein the determining unit is further configured to determine a second route metric value of the corresponding route from the second network device to the SRv6 locator in the second network domain.

38. The apparatus according to claim 37, wherein the determining unit is specifically configured to: if the route metric identifier is a first identifier, use a sum of the first route metric value and the second route metric value as the route cost of the corresponding route from the second network device to the SRv6 locator.

39. The apparatus according to any one of claims 36 to 38, wherein the determining unit is specifically configured to: if the route metric identifier is a second identifier, use the first route metric value as the route cost of the corresponding route from the second network device to the SRv6 locator.

40. The apparatus according to any one of claims 36 to 39, wherein the packet comprises an SRv6 locator TLV, and the SRv6 locator TLV comprises the route metric identifier.

41. The apparatus according to claim 40, wherein the SRv6 locator TLV comprises a flags field Flags, and Flags comprises the route metric identifier.

42. The apparatus according to claim 41, wherein Flags comprises an extension bit, and the extension bit carries the route metric identifier.

43. The method according to claim 40, wherein the SRv6 locator TLV comprises a first sub-type length value TLV, and the first sub-TLV comprises the route metric identifier.

44. A route information transmission apparatus, wherein the apparatus comprises:
a receiving unit, configured to receive, according to a first routing protocol, a route advertisement packet used to advertise a route of an SRv6 locator Locator, wherein the route advertisement packet comprises the SRv6 locator and a route identifier, and the route identifier indicates a source of the SRv6 locator; and
a processing unit, configured to: when determining that the route identifier is an identifier of a network device, avoid introducing the SRv6 locator into a second routing protocol.

45. The apparatus according to claim 44, wherein the route advertisement packet comprises an SRv6 locator TLV, and the SRv6 locator TLV comprises the route identifier.

46. The apparatus according to claim 45, wherein the SRv6 locator TLV comprises a second sub-TLV, and the second sub-TLV comprises the route identifier.

47. A communication device, wherein the device comprises a processor and a memory, wherein
the memory is configured to store instructions or a computer program; and
the processor is configured to execute the instructions or the computer program in the memory, to cause the communication device to perform the method according to any one of claims 1 to 12, or perform the method according to any one of claims 13 to 20, or perform the method according to any one of claims 21 to 23.

48. A computer-readable storage medium, comprising instructions, wherein when the instructions are run on a computer, the computer is enabled to perform the method according to any one of claims 1 to 12, or perform the method according to any one of claims 13 to 20, or perform the method according to any one of claims 21 to 23.

49. A computer program product, wherein the computer program product comprises a program; and when the program is run on a processor, a computer or a network device is enabled to perform the method according to any one of claims 1 to 12, or perform the method according to any one of claims 13 to 20, or perform the method according to any one of claims 21 to 23.

50. A chip, comprising an interface circuit and a processor, wherein the interface circuit is connected to the processor, and the processor is configured to enable the chip to perform the method according to any one of claims 1 to 12, or perform the method according to any one of claims 13 to 20, or performing the method according to any one of claims 21 to 23.
